# FASCICULE DE BREVET EUROPEEN

(11) **EP 3 920 422 B1**
(45) Date de publication et mention de la délivrance du brevet: **03.08.2022**
(21) Numéro de dépôt: 20315291.3
(22) Date de dépôt: 01.06.2020
(51) Int. Cl.: H04B 1/00, G01S 11/02

(54) **SYSTÈME DE DÉTECTION DE PROXIMITÉ**
NÄHERUNGSSENSORSYSTEM
PROXIMITY DETECTION SYSTEM

(43) Date de publication de la demande: 08.12.2021
(73) Titulaire: INSIGHT SIP, 06130 Grasse (FR)
(72) Inventeur: Barratt, Christopher, 06906 Sophia-Antipolis (FR); Beghin, Michel, 06906 Sophia-Antipolis (FR); Genin, Philippe, 06906 Sophia-Antipolis (FR)
(74) Mandataire: Decobert, Jean-Pascal

(56) Documents cités:
- EP-A2- 1 261 228
- JP-A- S63 317 795
- JP-A- 2018 004 318
- US-A1- 2010 321 245

## Description

### DOMAINE TECHNIQUE DE L'INVENTION

La présente invention concerne le domaine des systèmes de détection de proximité. Elle trouve pour application particulièrement avantageuse le domaine des systèmes portables pour la détection d'une proximité relativement à un autre système embarqué.

### ETAT DE LA TECHNIQUE

Il existe de nombreuses techniques permettant d'évaluer une distance entre plusieurs objets. Toutefois, cela se complique dès lors que les objets en question sont mobiles, voire même portables. Dans de telles conditions où les ressources système et énergétique sont grandement limitées, de nombreux compromis sont nécessaires.

Ainsi, on aboutit bien souvent à des systèmes dans lesquelles les distances mesurées sont soient incertaines, soit peu précis.

A l'heure des objets connectés, et de la notion de distance sociale, on comprend que la capacité d'évaluer une distance de manière précise, fiable, reproductible et avec une consommation énergétique faible est un enjeu majeur.

Un objet de la présente invention est donc de proposer une solution répondant en partie au moins à ces divers challenges technologiques et sociétaux.

La publication brevet US 2010/321245 A1 décrit un système de détection de proximité. Le document JP S63 317795 A présente un système de détection de distance pour véhicule automobile. Le document JP 2018 004318 A est relatif à un dispositif de mesure à courte distance. La publication brevet EP 1261228 A2 concerne un système de radiocommunication.

Les autres objets, caractéristiques et avantages de la présente invention apparaîtront à l'examen de la description suivante et des dessins d'accompagnement. Il est entendu que d'autres avantages peuvent être incorporés.

### RESUME DE L'INVENTION

Pour atteindre cet objectif, selon un mode de réalisation on prévoit un système selon la revendication 1.

Il permet, lorsque les émetteurs-récepteurs, sont portés par des utilisateurs, de notifier les utilisateurs dès lors qu'ils sont trop proches les uns des autres.

Cela permet d'utiliser une première technologie de communication radio pour l'évaluation de certaines distances, puis d'une seconde technologie de communication radio pour l'évaluation de distances plus réduites.

Cela permet de tirer avantage de deux technologies de communication radio en fonction des conditions de distances.

De manière avantageuse, le système utilise un module de communication primaire configuré pour une communication dans une large bande de fréquences et à faible consommation énergétique. Ce module radio primaire permet une première évaluation de la distance entre les émetteurs-récepteurs.

De plus, et de manière astucieuse, le module radio secondaire prend la main sur l'évaluation de la distance dès lors que les émetteurs-récepteurs sont plus proches les uns des autres, cela afin d'obtenir une précision plus grande via des modules radio secondaires plus gourmands en énergie mais apportant une plus grande précision.

Par l'utilisation de deux technologies de communication radio différentes, la présente invention permet une première évaluation de distance dans une première gamme, et une deuxième évaluation de distance dans une deuxième gamme, la première gamme de distance étant supérieure à la deuxième gamme de distances.

Selon un mode de réalisation, on prévoit également un émetteur-récepteur, de préférence portatif, selon la revendication 9.

Selon un mode de réalisation on prévoit aussi un dispositif bracelet comprenant au moins un émetteur-récepteur selon la présente solution.

Selon un mode de réalisation on prévoit également un procédé de détection de proximité selon la revendication 13.

Selon un mode de réalisation on prévoit aussi un produit programme d'ordinateur comprenant des instructions, qui lorsqu'elles sont effectuées par au moins un processeur, exécute au moins les étapes du procédé selon la présente solution.

### BREVE DESCRIPTION DES FIGURES

Les buts, objets, ainsi que les caractéristiques et avantages de l'invention ressortiront mieux de la description détaillée d'un mode de réalisation de cette dernière qui est illustré par les dessins d'accompagnement suivants dans lesquels :
La figure 1 représente un schéma d'un émetteur-récepteur selon un mode de réalisation de la présente invention.
La figure 2 représente un émetteur-récepteur selon un mode de réalisation de la présente invention.
La figure 3 représente certaines étapes d'u procédé de détection de proximité selon un mode de réalisation de la présente invention.
La figure 4 représente un premier émetteur-récepteur et un deuxième émetteur-récepteur à une distance de repérage selon un mode de réalisation de la présente invention.
La figure 5 représente un premier émetteur-récepteur et un deuxième émetteur-récepteur se trouvant à distance l'un de l'autre selon un mode de réalisation de la présente invention.
La figure 6 représente un premier émetteur-récepteur et un deuxième émetteur-récepteur se trouvant à une distance de communication primaire selon un mode de réalisation de la présente invention.
La figure 7 représente un premier émetteur-récepteur et un deuxième émetteur-récepteur se trouvant à une distance de communication secondaire selon un mode de réalisation de la présente invention.
La figure 8 représente un premier émetteur-récepteur et un deuxième émetteur-récepteur se trouvant à une distance de notification selon un mode de réalisation de la présente invention
La figure 9 représente un système selon un mode de réalisation de la présente invention.

Les dessins sont donnés à titre d'exemples et ne sont pas limitatifs de l'invention. Ils constituent des représentations schématiques de principe destinées à faciliter la compréhension de l'invention et ne sont pas nécessairement à l'échelle des applications pratiques. En particulier les dimensions ne sont pas représentatives de la réalité.

### DESCRIPTION DETAILLEE DE L'INVENTION

Avant d'entamer une revue détaillée de modes de réalisation de l'invention, sont énoncées ci-après des caractéristiques optionnelles qui peuvent éventuellement être utilisées en association ou alternativement :
Selon un exemple, la première bande de fréquences présente une largeur inférieure à une largeur de la deuxième bande de fréquences.

Selon un exemple, la première bande de fréquence présente une largeur et la deuxième bande de fréquence présente une largeur, le ratio entre la largeur de la deuxième bande de fréquence et la largeur de la première bande de fréquence est supérieure à 50, de préférence à 100 et avantageusement à 250.

Selon un exemple, la largeur de la première bande de fréquence est inférieure à 2MHz, de préférence à 1.5MHz et avantageusement à 1MHz.

Selon un exemple, la largeur de la deuxième bande de fréquence est supérieure à 500MHz, de préférence à 750MHz et avantageusement à 1000MHz.

Selon un exemple, la première amplitude est supérieure à la deuxième amplitude.

Selon un exemple, le ratio entre la première amplitude et la deuxième amplitude est supérieure à 10, de préférence à 20 et avantageusement à 40.

Selon un exemple, la première amplitude est supérieure à -10dBm, de préférence à 0dBm et avantageusement à 4dBm.

Selon un exemple, la deuxième amplitude est inférieure à -15.3dBm, de préférence à -20dBM et avantageusement à -30dBm.

Selon un exemple, le niveau de promiscuité peut comprendre au moins l'un des paramètres suivants : un niveau de rapprochement, un temps écoulé depuis le franchissement d'une distance seuil, le franchissement d'une distance seuil.

Selon un exemple, la communication entre le module radio secondaire du premier émetteur-récepteur et le module radio secondaire du deuxième émetteur-récepteur est une communication synchronisée, la synchronisation de cette communication synchronisée étant assurée en partie au moins par le module radio primaire du premier émetteur-récepteur et par le module radio primaire du deuxième émetteur-récepteur.

Cela permet d'établir une communication synchronisée pour la communication secondaire au travers de la communication primaire.

Selon un exemple, la valeur secondaire de distance évaluée est transmise au deuxième émetteur-récepteur depuis le module radio primaire du premier émetteur-récepteur vers le module radio primaire du deuxième émetteur-récepteur.

Cela permet d'utiliser les modules radio secondaires principalement, et de préférence uniquement, pour la mesure de la distance de communication secondaire.

Selon un exemple, le premier émetteur-récepteur est configuré pour, si la valeur primaire de distance évaluée passe sous la distance de communication secondaire entre le module radio secondaire du premier émetteur-récepteur et le module radio secondaire du deuxième émetteur-récepteur, stopper l'évaluation de la valeur primaire de distance.

Selon un exemple, la distance de communication primaire est supérieure à la distance de communication secondaire, et la distance de communication secondaire est supérieure à la distance de notification.

Selon un exemple, la notification de la détection de proximité comprend au moins l'un parmi : une vibration, un son, un signal lumineux, etc...

Selon un exemple, l'émetteur-récepteur comprend au moins un module d'interaction homme/machine configuré pour permettre la notification de la détection de proximité, ledit module d'interaction homme/machine comprenant au moins l'un parmi : un module de vibration, un module sonore, un module lumineux, etc...

Selon un exemple, l'émetteur-récepteur comprend au moins une batterie électrique configurée pour alimenter électriquement l'émetteur-récepteur.

Selon un exemple, l'émetteur-récepteur comprend au moins un dispositif d'attache configuré pour permettre la fixation de l'émetteur-récepteur sur un utilisateur.

La présente invention concerne le domaine de la détection de proximité, en particulier de la promiscuité entre des dispositifs mobiles les uns par rapport aux autres, et donc de leur proximité relative. Ainsi, par exemple non limitatif, la présente invention trouve pour application la mesure de la distance sociale entre individus porteurs de ce type de dispositifs.

Par exemple, la présente invention permet d'évaluer la distance relative entre dispositifs puis d'informer le porteur de chaque dispositif d'une trop grande proximité lorsque les dispositifs sont trop près l'un de l'autre.

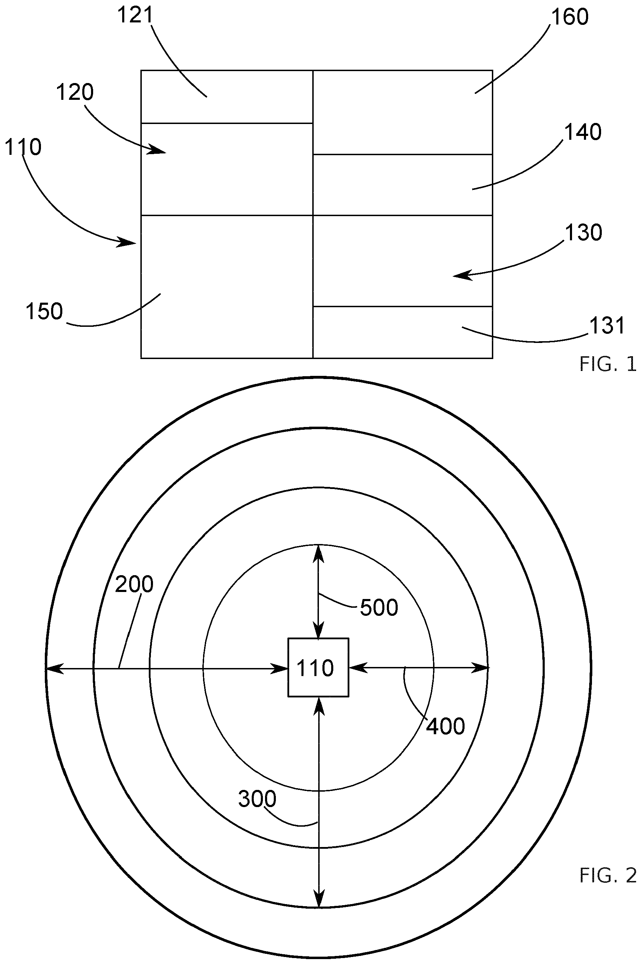

Ainsi, selon un mode de réalisation et tel qu'illustré en figure 1 à titre d'exemple non limitatif, la présente invention concerne un émetteur-récepteur 110. Cet émetteur-récepteur 110 est de préférence portatif. Il peut par exemple être porté par un utilisateur, comme un badge, un bracelet ou une ceinture par exemple.

De manière plus générale, il peut être également incorporé dans des éléments textiles, dans des appareils comme une montre ou un téléphone intelligent, etc...

Cet émetteur-récepteur 110 est avantageusement configuré pour détecter une distance de proximité avec au moins un autre émetteur-récepteur 110. Cet autre émetteur-récepteur 110 peut être pris parmi une pluralité d'émetteurs-récepteurs 110. De préférence, les émetteurs récepteurs 110 sont identiques. Pour le moins, il propose de préférence chacun des organes de communication, de stockage d'énergie et de traitement d'instructions indiqués ultérieurement. On notera que les termes » un deuxième émetteur-récepteur » et « un autre émetteur-récepteur » peuvent être interprétés de la même manière.

En particulier, et de manière astucieuse, l'émetteur-récepteur 110 est configuré pour pouvoir évaluer sa distance relativement à une pluralité d'autres émetteurs-récepteurs 110, et de préférence simultanément, ou du moins les uns après les autres sur une échelle de temps très courte relativement aux déplacements relatifs des émetteurs-récepteurs 110 les uns par rapport aux autres.

Selon un mode de réalisation, l'émetteur-récepteur 110 comprend au moins :
- Un module radio primaire 120 ; Ce module radio primaire est de préférence configuré pour communiquer, via une antenne 121, avec au moins un module radio primaire 120 d'un autre émetteur-récepteur 110 de la pluralité d'émetteurs-récepteurs 110. Cette communication est avantageusement bidirectionnelle. Selon un mode de réalisation, le module radio primaire 120 est configuré pour communiquer selon une première bande de fréquences et selon une première amplitude ; Avantageusement, cette première bande de fréquence présente une largeur, c'est-à-dire la largeur du spectre en fréquence des signaux émis et reçus par le module radio primaire 120. Cette largeur est inférieure à 50 Mhz et de préférence est égale ou inférieure à 1 MHz ; De préférence, la première amplitude, c'est-à-dire la hauteur des signaux émis et reçus par le module radio primaire 120, est supérieure à -10dBm en puissance isotrope rayonnée équivalente (PIRE ou encore EIRP en anglais) ou à 0.1mW, et de préférence supérieure ou égale à 0dBm en puissance isotrope rayonnée équivalente ou à 1mW.
- Un module radio secondaire 130 ; Ce module radio secondaire 130 est de préférence configuré pour communiquer, via une antenne 131, avec au moins un module radio secondaire 130 d'un autre émetteur-récepteur 110 de la pluralité d'émetteurs-récepteurs 110. Cette communication est avantageusement bidirectionnelle. Selon un mode de réalisation, le module radio secondaire 130 est configuré pour communiquer selon une deuxième bande de fréquences et selon une deuxième amplitude ; Avantageusement, cette deuxième bande de fréquence présente également une largeur, c'est-à-dire la largeur du spectre en fréquence des signaux émis et reçus par le module radio secondaire 130. Cette largeur est supérieure à 250 Mhz et de préférence est égale ou supérieure à 500 MHz ; De préférence, la deuxième amplitude, c'est-à-dire la hauteur des signaux émis et reçus par le module radio secondaire 130, est inférieure à -15.3 dBm en accord avec les normes ou à 0.03mW.

Selon un mode de réalisation préféré, la largeur de première bande de fréquences est inférieure à celle de la deuxième bande de fréquences.

Selon un mode de réalisation préféré, la première amplitude est supérieure à la deuxième amplitude.

De manière avantageuse, l'émetteur-récepteur 110 est configuré pour évaluer une valeur primaire de distance entre son module radio primaire 120 et le module radio primaire 120 d'un autre émetteur-récepteur 112 à partir d'une mesure de la puissance d'au moins un signal reçu par son module radio primaire 120 depuis le module radio primaire 120 du deuxième émetteur-récepteur 112. Cette évaluation se produit de préférence lorsque son module radio primaire 120 et le module radio primaire 120 de l'autre émetteur-récepteur 112 se rapprochent l'un de l'autre en passant sous une distance de communication primaire 300. Cette distance de communication primaire 300 correspond de préférence à la distance à partir de laquelle une communication est possible entre deux modules radio primaires 120. On appelle distance de communication, une distance entre deux éléments à partir de laquelle ces deux éléments peuvent établir entre eux une communication. On appelle synchronisation d'une communication le procédé permettant l'établissement d'une communication nécessitant une synchronisation et/ou un appairage des éléments impliqués dans ladite communication.

Cette évaluation, également nommée mesure, de cette valeur primaire de distance est de préférence réalisée en mesurant, et de préférence en analysant, la puissance d'au moins un signal reçu par son module radio primaire 120 et émis depuis le module radio primaire 120 d'un autre émetteur-récepteur 110.

Cette technique de mesure d'une distance en se basant sur une mesure de puissance s'appelle RSSI de l'anglais « Received Signal Strength Indication » pour « indication de force de signal reçu ». Cette technique consiste à mesurer la puissance d'un signal reçu de sorte à estimer la distance de l'émetteur en connaissant au préalable la puissance d'origine du signal.

En télécommunication, RSSI est une mesure de la puissance en réception d'un signal reçu d'une antenne. Son utilité est de fournir une indication sur l'intensité du signal reçu. Cette mesure de signal reçu permet d'avoir une idée de la distance entre émetteur et récepteur. La précision de la mesure de distance par RSSI est médiocre, au mieux de l'ordre du mètre.

De manière avantageuse, le module radio primaire 120 peut être ou comprendre un module radio utilisant le protocole dit « Bluetooth^{®} » ou le protocole dit « Bluetooth^{®} Low Energy » ou BLE.

Le protocole BLE aussi appelé BlueTooth^{®} Smart est un protocole de communication radio basse consommation qui émet à 2.4 GHz. Les produits BLE peuvent communiquer entre eux dans le respect de normes définis par le groupement international BlueTooth SIG.

Via ce type de technique de mesure de distance et avantageusement ce type de standard, le module radio primaire 120 est apte à mesurer la distance le séparant d'un autre module radio primaire 120. Cette technique permet une faible consommation énergétique mais la mesure obtenue est peu précise et peut être influencée par de nombreux paramètres, comme par exemple par la nature des éléments séparant les deux modules radio primaires. Toutefois, en phase d'approche, comme décrit par la suite, cette technique permet d'évaluer une distance de communication primaire 300 en utilisant qu'une faible quantité d'énergie.

On notera également que le module radio primaire 120 permet l'échange d'informations avec au moins un autre émetteur-récepteur 110. Par exemple, le module radio primaire 120 peut permettre l'établissement d'une communication et d'une synchronisation entre l'émetteur-récepteur 110 et au moins un autre émetteur-récepteur 110 de même nature.

Une fois cette valeur primaire de distance évaluée, elle peut être comparée avec une distance de communication secondaire 300. Cette comparaison permet alors d'activer ou non le module radio secondaire 130 de l'émetteur-récepteur 110.

Selon un mode de réalisation, le module radio secondaire 130 peut être ou comprendre un module radio à large bande de fréquences, également appelé à large bande passante, dite UWB de l'anglais « ultra wide band ». Dans la présente demande, un module radio à large bande de fréquences s'entend d'un module radio configurée pour fonctionner sur une bande de fréquences allant de quelques mégahertz à quelques dizaines de gigahertz, par exemple depuis 3000 MHz et/ou jusqu'à 11000 MHz.

L'Ultra Wideband (UWB), ou Ultra Large Bande en français (ULB) est une technique de modulation radio qui est basée sur la transmission d'impulsions de très courte durée, souvent inférieure à la nanoseconde. Contrairement aux systèmes radio traditionnels basés sur des bandes de fréquences étroites, l'UWB étale la communication sur un très large spectre de fréquence. Le spectre de communication a un rapport largeur de bande sur fréquence centrale d'au moins 20 %. La puissance émise étalée sur une large bande de fréquence conduit à un niveau de spectre de rayonnement très plat et très bas de même niveau d'amplitude que le rayonnement radio de « bruit de fond ». Les impulsions radio UWB étant très courtes et synchronisées sur une très large bande de fréquence, elles sont détectables dans le « bruit de fond ». Ceci conduit à des radios de très basse puissance d'émission et très peu sensibles aux perturbations extérieures.

Via ce type de module radio secondaire, il est alors possible d'évaluer une valeur secondaire de distance avec une meilleure précision que celle obtenue lors de l'évaluation de la valeur primaire de distance.

Ainsi, si la valeur primaire de distance évaluée est inférieure à la distance de communication secondaire 400, alors l'émetteur-récepteur 110 va utiliser son module radio secondaire 130 pour évaluer une valeur secondaire de distance entre son module radio secondaire 130 et le module radio secondaire 130 de l'autre émetteur-récepteur 110. Cette mesure de distance est avantageusement réalisée via la mesure du temps de transmission, appelé également temps de vol, d'un signal transmis depuis son module radio secondaire 130 et envoyé vers le module radio secondaire 130 de l'autre émetteur-récepteur 110.

Selon un mode de réalisation, cette mesure de distance s'effectue par une transmission d'un signal depuis le module radio secondaire 130 d'un premier émetteur-récepteur 111, appelé initiateur, vers le module radio secondaire 130 d'un deuxième émetteur-récepteur 112, appelé répondeur. Lorsque le répondeur reçoit le signal, il le renvoie vers l'initiateur. La mesure du temps de l'aller plus du retour et plus un temps prédéterminé, et de préférence fixe, de traitement permet de calculer le temps de vol des signaux entre les deux émetteurs-récepteurs. La distance est calculée par la formule de transmission des ondes à la vitesse de la lumière.

De manière astucieuse, cette technique de mesure de distance est très avantageuse car elle permet d'obtenir une très grande précision de mesure, supérieure à la technique précédente dite RSSI. Toutefois, cette technique de mesure est plus gourmande en énergie, aussi, l'invention n'active cette mesure que lorsqu'une précision de mesure est nécessaire, c'est-à-dire lorsque les émetteurs-récepteurs 110 sont suffisamment proches les uns des autres pour nécessiter cette précision.

Selon un mode de réalisation avantageux et préféré, une évaluation de la valeur primaire de distance consomme moins d'énergie qu'une évaluation de la valeur secondaire de distance.

Ensuite, si la valeur secondaire de distance évaluée est inférieure à une distance de notification 500 prédéterminée, alors l'émetteur-récepteur 110 est configuré pour évaluer un niveau de promiscuité. Ce niveau de promiscuité peut selon un mode de réalisation correspondre au franchissement d'une distance de rapprochement prédéterminée entre l'émetteur-récepteur et de l'autre émetteur-récepteur. Selon un autre mode de réalisation, le niveau de promiscuité peut également correspondre à un temps écoulé depuis le franchissement de cette distance de rapprochement prédéterminée.

Selon un autre mode de réalisation, ce niveau de promiscuité peut correspondre à un niveau de rapprochement, c'est-à-dire à une valeur inversement proportionnelle à la distance séparant les deux émetteurs-récepteurs 110.

Lorsque ce niveau de promiscuité entre deux émetteurs-récepteurs est supérieur à un seuil prédéterminé, alors au moins un des deux émetteurs-récepteurs, et de préférence les deux sont configurés pour notifier une détection de proximité.

Ainsi, et selon un mode de réalisation, si la valeur secondaire de distance évaluée est inférieure à une distance de notification 500 prédéterminée, l'émetteur-récepteur 110 est configuré pour notifier une détection de proximité. En effet, dès lors que la distance entre les deux émetteurs-récepteurs 110 se trouve en dessous d'un seuil prédéterminé, chaque émetteur-récepteur 110 va notifier qu'ils sont trop prêts l'un de l'autre. Cette notification est avantageusement destinée aux porteurs des émetteurs-récepteurs 110. Cette notification peut prendre diverses formes comme un son, une vibration, un signal lumineux, etc... La notification peut par ailleurs comprendre l'émission d'un signal radio vers un autre appareil, un tel appareil pouvant être le deuxième émetteur récepteur situé à une distance trop faible, un autre de la pluralité d'émetteurs récepteurs, ou un autre dispositif apte à produire une indication de la promiscuité à un utilisateur. Ce dernier est de préférence le porteur de l'émetteur-récepteur 110. Par exemple, l'émetteur-récepteur 110 notifie la promiscuité, sous forme de l'envoi d'un signal, un appareil de télécommunications, comme un téléphone intelligent, et ce dernier fournit une indication à son porteur, comme la sonnerie du téléphone ou une vibration.

De manière astucieuse, l'émetteur-récepteur 110 comprend au moins un module d'interaction homme/machine 160. C'est ce module d'interaction homme/machine 160 qui a pour fonction de générer ladite notification. Ce module 160 peut ainsi comprendre par exemple un vibreur, un haut-parleur ou encore une source de lumière, etc....

Tel qu'illustré en figure 1, l'émetteur-récepteur 110 comprend en outre une batterie électrique 150 destinée à alimenter en partie au moins les éléments de l'émetteur-récepteur 110, en particulier et par exemple, au moins un microprocesseur 140 apte à exécuter un procédé 600 décrit ci-après. Notamment, l'émetteur récepteur 110 comprend de préférence une mémoire, avantageusement au moins en partie non volatile, apte à stocker des données d'instructions, instructions réalisant le procédé 600 lorsqu'elles sont exécutées par le microprocesseur 140.

Enfin, afin de rendre l'émetteur-récepteur 110 portatif, celui-ci peut comprendre un dispositif d'attache ou être inclus dans un dispositif destiné à être porté par un utilisateur.

La figure 2 illustre un émetteur-récepteur 110 selon un mode de réalisation de la présente invention. Sur cette figure la distance de communication primaire 300 a été illustrée, ainsi que la distance de communication secondaire 400, et la distance de notification 500. On notera également une distance de repérage 200, c'est la distance en dessous de laquelle les émetteurs-récepteurs peuvent se détecter mutuellement. Nous allons décrire plus précisément le rôle de ces différentes distances ci-après.

On notera que, de préférence, la distance de repérage 200 est supérieure à la distance de communication primaire 300.

Avantageusement, la distance de communication primaire 300 est supérieure à la distance de communication secondaire 400.

De manière astucieuse, la distance de communication secondaire 400 est supérieure à la distance de notification 500.

Selon un mode de réalisation, la distance de repérage est sensiblement égale à 50m, la distance de communication primaire est sensiblement égale à 20m, la distance de communication secondaire est sensiblement égale à 8m et la distance de notification est sensiblement égale à 2m.

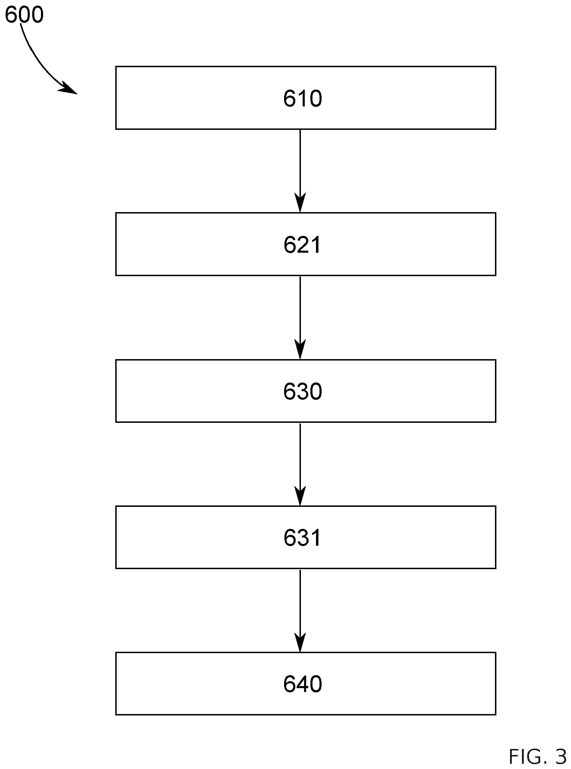

La figure 3 illustre, à titre d'exemple et selon un mode de réalisation, un procédé 600 selon la présente invention. Ce procédé 600 est un procédé de détection de proximité entre un premier émetteur-récepteur 111 tel que précédemment décrit et au moins un deuxième émetteur-récepteur 112 également tel que précédemment décrit.

Ce procédé 600 comprend au moins les étapes suivantes, de préférence mises en œuvre par le premier émetteur-récepteur 111 :
- Détection 610 par le module radio primaire 120 du premier émetteur-récepteur 111 du module radio primaire 120 du deuxième émetteur-récepteur 112 ; Cette détection est rendue possible car chaque module radio primaire 120 est en mode découverte de son environnement radio, de sorte à émettre régulièrement un signal et à chercher à recevoir un signal ; La distance à partir de laquelle la détection 610 est possible est dite distance de repérage 200 ; la distance requise pour l'établissement d'une communication est dite distance de communication primaire 300 ; On entend par détection la réception et/ou l'émission d'au moins un signal comprenant par exemple un identifiant, voire un protocole de communication, etc...
- Dès lors que la distance entre les modules radio primaires 120 est inférieure ou égale à la distance de communication primaire 300, établissement 620 d'une communication primaire, de préférence bidirectionnelle, du module radio primaire 120 du premier émetteur-récepteur 111 avec le module radio primaire 120 du deuxième émetteur-récepteur 112 ; Lors de cette communication primaire des identifiants peuvent être échangés, des protocoles de communication également par exemple, voire encore des distances mesurées. De manière avantageuse, cette communication primaire permet l'établissement d'une synchronisation de communication qui pourra être utilisée par la suite lors d'une communication secondaire entre les modules radio secondaires 130 par exemple ; De préférence, cette communication primaire permet l'appairage entre le premier émetteur-récepteur 111 et le deuxième émetteur-récepteur 112, cet appairage pourra être utilisée par la suite lors d'une communication secondaire entre les modules radio secondaires 130 par exemple ; Cette communication primaire permet alors l'évaluation de la distance entre les modules radio primaires 120 considérés ;
- Lorsque le module radio primaire 120 du premier émetteur-récepteur 111 et le module radio primaire 120 du deuxième émetteur-récepteur 112 se rapprochent l'un de l'autre en passant sous la distance de communication primaire 300, évaluation 621, par le premier émetteur-récepteur 111, de la valeur primaire de distance entre le module radio primaire 120 du premier émetteur-récepteur 111 et le module radio primaire 120 du deuxième émetteur-récepteur 112. Comme indiqué précédemment cette mesure de distance est avantageusement réalisée via une mesure de la puissance d'au moins un signal reçu par le module radio primaire 120 du premier émetteur-récepteur 111 et émis depuis le module radio primaire 120 du deuxième émetteur-récepteur 112 ;
- Ensuite, si la valeur primaire de distance évaluée passe sous la distance de communication secondaire 400 entre le module radio secondaire 130 du premier émetteur-récepteur 111 et le module radio secondaire 130 du deuxième émetteur-récepteur 112 :
   - Alors, il y a détection, par le module radio secondaire 130 du premier émetteur-récepteur 111 du module radio secondaire 130 du deuxième émetteur-récepteur 112 ; En effet, lorsque la distance est suffisamment proche entre deux modules radio primaires 120, les modules radio secondaires 130 sont alors utilisés pour évaluer avec une plus grande précision la distance les séparant ;
   - Il y a alors établissement 630 d'une communication secondaire, de préférence bidirectionnelle, du module radio secondaire 130 du premier émetteur-récepteur 111 avec le module radio secondaire 130 du deuxième émetteur-récepteur 112 ; Lors de cette communication secondaire des identifiants peuvent être échangés, des protocoles de communication également par exemple, voire encore des distances mesurées. De manière avantageuse, cette communication secondaire est permise par la synchronisation préalable du premier émetteur-récepteur 111 avec le deuxième émetteur-récepteur 112 via la communication primaire ; De préférence, cette communication secondaire est permise par l'appairage préalable du premier émetteur-récepteur 111 avec le deuxième émetteur-récepteur 112 via la communication primaire ; On notera que selon un mode de réalisation, l'établissement de la communication secondaire n'interrompt pas nécessairement la communication primaire. De manière avantageuse, la communication primaire et la communication secondaire sont configurées pour fonctionner en parallèles l'une de l'autre ; Selon un autre mode de réalisation, l'établissement de la communication secondaire, interrompt la communication primaire, et de préférence inversement ;
   - Ensuite, cette communication secondaire permet l'évaluation 631, par le premier émetteur-récepteur 111, de la valeur secondaire de distance entre le module radio secondaire 130 du premier émetteur-récepteur 111 et le module radio secondaire 130 du deuxième émetteur-récepteur 112 ; tel que précédemment décrit, cette mesure de la valeur secondaire de distance est réalisée via une mesure du temps de transmission d'un signal transmis depuis le module radio secondaire 130 du premier émetteur-récepteur 111 vers le module radio secondaire 130 du deuxième émetteur-récepteur 112 ;
   - Ensuite, si la valeur secondaire de distance est inférieure à une distance de notification 500 prédéterminée, alors il y a évaluation du niveau de promiscuité, par le premier émetteur-récepteur 111, puis notification 640 d'une détection de proximité, par le premier émetteur-récepteur 111, si le niveau de promiscuité est supérieur à un seuil prédéterminé.

Selon un mode de réalisation préféré, chaque émetteur-récepteur 110 de la pluralité d'émetteurs-récepteurs 110 est configuré pour réaliser les étapes dudit procédé 600. En particulier, le deuxième émetteur-récepteur 112 est configuré pour effectuer les mêmes actions que le premier émetteur-récepteur 111, et en particulier pour faire les évaluations de valeurs primaire et secondaire de distance, de préférence dans les mêmes conditions. On notera que de préférence le premier émetteur-récepteur 111 et le deuxième émetteur-récepteur 112 s'échangent l'un l'autre des données lorsqu'ils sont à portée de communication, de préférence au moins à portée de communication primaire, c'est-à-dire à une distance l'un de l'autre inférieure ou égale à la distance de communication primaire 300.

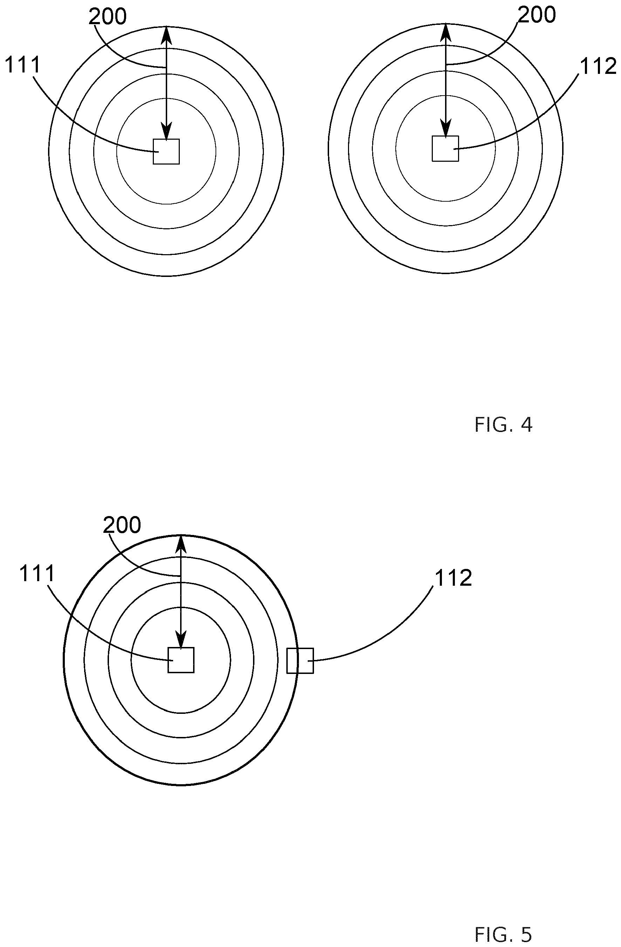

Ce procédé 600 va désormais être décrit selon un mode de réalisation au travers des figures 4 à 8.

En général, il est avantageux qu'au moins le premier émetteur récepteur 111, mais de préférence que l'ensemble de la pluralité d'émetteurs récepteurs soient en mode écoute et recherche par défaut. Cet état n'est cependant pas très énergivore dans la mesure où il ne fait avantageusement appel qu'aux modules radio primaires.

Sur la figure 4, le premier émetteur-récepteur 111 et le deuxième émetteur-récepteur 112 sont distants l'un de l'autre d'une distance telle qu'ils ne peuvent pas se repérer l'un l'autre. Ils sont alors chacun en mode écoute et recherche. Chaque module radio primaire 120 émet un signal et est en attente d'une réponse d'un autre module radio primaire 120.

Sur la figure 5, le premier émetteur-récepteur 111 et le deuxième émetteur-récepteur 112 sont suffisamment proches pour qu'ils se détectent l'un l'autre. En effet, la distance les séparant est inférieure ou égale à la distance de repérage 200. Dans cette situation, chacun des modules radio primaires 120 reçoit une notification de l'autre indiquant sa présence.

Selon un mode de réalisation, lorsque la distance séparant le premier émetteur-récepteur 111 et le deuxième émetteur-récepteur 112 est inférieure ou égale à la distance de repérage 200, les deux modules radio primaires 120 se voient l'un l'autre et peuvent estimer la distance les séparant, de préférence par mesure de type RSSI. A cette distance, le premier émetteur-récepteur 111 et le deuxième émetteur-récepteur 112 ne communiquent pas entre eux. Chaque module radio primaire 120 détecte, « voit », le signal émis par l'autre. Ce signal est comparable au signal d'une simple balise par exemple.

Il est à noter que l'initiation de l'évaluation de la valeur primaire de distance peut être déclenchée dès qu'un émetteur récepteur en détecte un autre ; cela peut, par exemple, permettre à cet émetteur récepteur de surveiller l'évolution de la distance le séparant d'un autre émetteur récepteur. Dans une telle phase, il n'est pas forcément nécessaire que les deux émetteurs récepteurs communiquent. Alternativement, il est aussi possible de démarrer par une mise en communication des deux émetteurs récepteurs, dès qu'ils sont à portée de communication, et de ne réaliser la mesure de distance qu'après un certain temps ou, simplement, lorsque la distance se réduit sous un seuil prédéterminé.

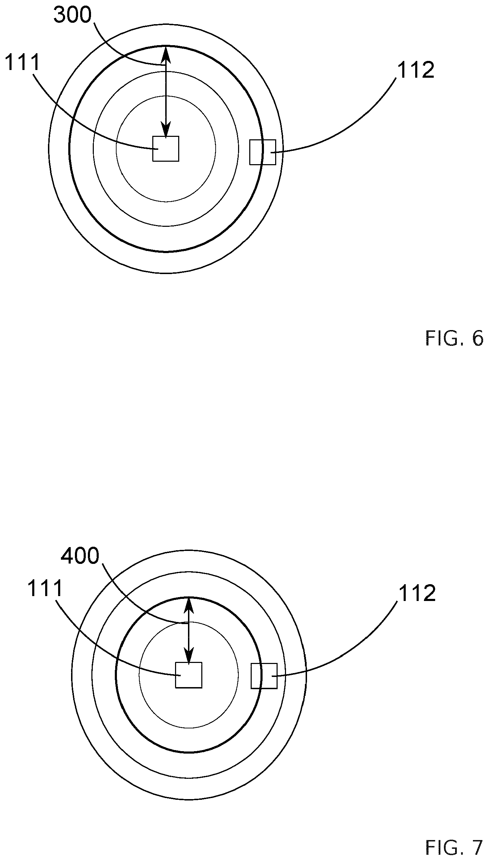

Sur la figure 6, la valeur primaire de distance séparant le premier émetteur-récepteur 111 et le deuxième émetteur-récepteur 112 est inférieure ou égale à la distance de communication primaire 300. De préférence à partir de cette distance de communication primaire 300, chaque émetteur-récepteur 110 parmi le premier 111 et le deuxième 112, utilise son module radio primaire 120 pour communiquer et de préférence pour évaluer sa distance avec l'autre. De manière avantageuse, seulement l'un peut mesurer cette distance et la transmettre à l'autre via leur communication primaire.

Selon un mode de réalisation, lorsque la distance séparant le premier émetteur-récepteur 111 et le deuxième émetteur-récepteur 112 est inférieure ou égale à la distance de communication primaire 300, les deux modules radio primaires 120 ne sont pas simplement en mode balises comme précédemment, ils ne font pas que se « voir ». Ils passent en mode de communication et ils échangent des données pour préparer l'étape suivante en particulier ils préparent la synchronisation temporelle pour permettre l'établissement future de la communication secondaire, et les mesures de distances par temps de vols.

Sur la figure 7, le premier émetteur-récepteur 111 et le deuxième émetteur-récepteur 112 continuent à se rapprocher l'un de l'autre et franchissent la distance de communication secondaire 400. A cette distance, ceux sont leur module radio secondaire 130 qui vont être de préférence utilisés pour évaluer la distance les séparant. En effet, compte tenu que les deux émetteurs-récepteurs 111 et 112 sont de plus en plus proches, il est nécessaire d'obtenir une valeur plus précise de leur réelle distance. A partir de cette distance de communication secondaire 400, les modules radio secondaires 130 établissent une communication entre eux. De manière avantageuse, la distance les séparant est évaluée par au moins l'un des deux émetteurs-récepteurs est transmise à l'autre émetteur-récepteur via son module radio primaire, c'est-à-dire via la communication primaire. Ainsi, la distance mesurée est réalisée par la communication secondaire, et cette valeur peut par exemple être échangée entre les émetteurs-récepteurs via la communication primaire.

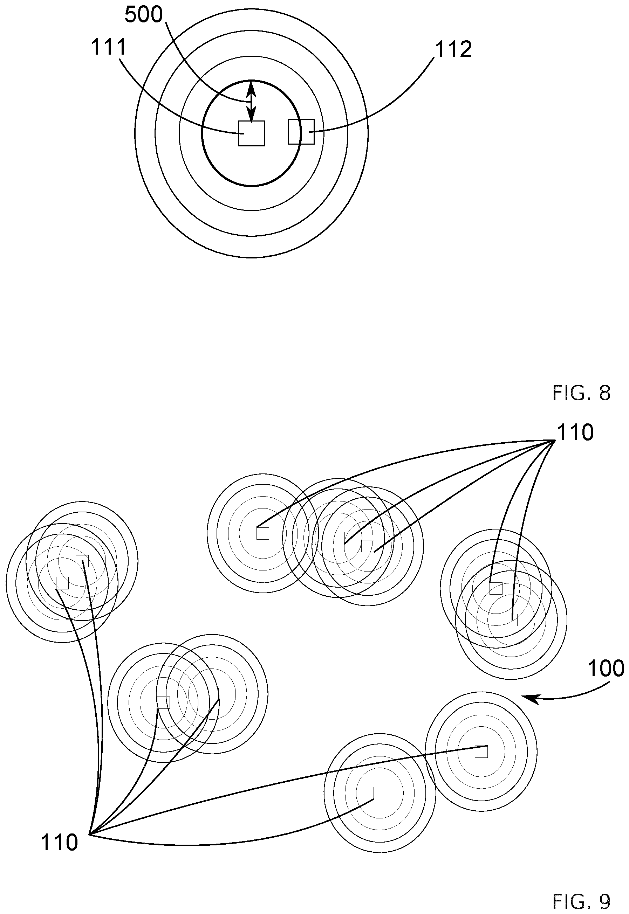

Sur la figure 8, la distance séparant le premier émetteur-récepteur 111 et le deuxième émetteur-récepteur 112 est inférieure ou égale à la distance de notification 500. Les deux émetteurs-récepteurs étant trop prêts l'un de l'autre, leur porteur en sont notifiés afin qu'ils puissent par exemple s'éloigner de nouveau.

Lorsque les émetteurs-récepteurs 111 et 112 s'éloignent, le processus s'effectue en sens inverse. En effet, d'abord la valeur secondaire de distance est inférieure à la distance de notification 500, puis en s'éloignant, la valeur secondaire de distance augmente et devient supérieure à la distance de notification 500.

Puis, lorsque la valeur secondaire de distance dépasse la distance de communication secondaire 400, les deux modules radio secondaires 130 cessent leur communication l'un avec l'autre, et la mesure de la valeur primaire de distance est de nouveau effectuée, cela en utilisant les deux modules radio primaires 120.

Selon un mode de réalisation, on appelle zone de repérage la zone spatiale située entre la distance de repérage 200 et la distance de communication primaire 300.

Selon un mode de réalisation, on appelle zone de communication primaire la zone spatiale située entre la distance de communication primaire 300 et la distance de communication secondaire 400.

Selon un mode de réalisation, on appelle zone de communication secondaire la zone spatiale située à une distance inférieure ou égale à la distance de communication secondaire 400.

Enfin, selon un mode de réalisation, on appelle zone de notification une zone spatiale située à une distance inférieure ou égale à la distance de notification 500.

Ainsi, lorsque le deuxième émetteur-récepteur 112 se trouve dans une de ces zones du premier émetteur-récepteur 111, alors le premier émetteur-récepteur 111 se trouve également dans la même zone correspondante du deuxième émetteur-récepteur 112.

Ainsi, le premier et le deuxième émetteurs-récepteurs franchissent l'un et l'autre en même temps les zones respectives de l'autre.

Selon un mode de réalisation, la zone de repérage définit une coquille autour des zones de communication primaire, secondaire et de notification.

Selon un mode de réalisation, la zone de communication primaire définit une coquille autour des zones de communication secondaire et de notification.

Selon un mode de réalisation, la zone de communication secondaire définit une coquille autour de la zone de notification.

De manière avantageuse, lorsque le deuxième émetteur-récepteur 112 se trouve dans la zone de repérage du premier émetteur-récepteur 111, chacun repère l'autre.

De préférence, lorsque le deuxième émetteur-récepteur 112 se trouve dans la zone de communication primaire du premier émetteur-récepteur 111, la communication primaire est établie et la valeur primaire de distance est évaluée.

Avantageusement, lorsque le deuxième émetteur-récepteur 112 se trouve dans la zone de communication secondaire du premier émetteur-récepteur 111, la communication secondaire est établie et la valeur secondaire de distance est évaluée, et de préférence la communication primaire est conservée pour transmettre en outre la valeur secondaire de distance évaluée depuis le premier émetteur-récepteur 111 vers le deuxième émetteur-récepteur 112.

Selon un mode de réalisation, lorsque le deuxième émetteur-récepteur se trouve dans la zone de notification du premier émetteur-récepteur, le premier émetteur-récepteur 111 évalue un niveau de promiscuité et si ce niveau est supérieur à un seuil prédéterminée, le premier émetteur-récepteur 111 notifie une détection de proximité, et de manière identique, le deuxième émetteur-récepteur 112 évalue un niveau de promiscuité et si ce niveau est supérieur à un seuil prédéterminée, le deuxième émetteur-récepteur 112 notifie une détection de proximité, et de préférence la communication secondaire est conservée pour poursuivre l'évaluation de la valeur secondaire de distance, et de préférence la communication primaire est conservée pour transmettre en outre la valeur secondaire de distance évaluée depuis le premier émetteur-récepteur 111 vers le deuxième émetteur-récepteur 112.

La figure 9 illustre un système 100 selon un mode de réalisation de la présente invention. Ce système 100 est avantageusement un système de détection de proximité entre au moins un premier émetteur-récepteur 111 et au moins un deuxième émetteur-récepteur 112. Ce système 100 peut comprendre une pluralité d'émetteurs-récepteurs 110 à laquelle appartiennent le premier émetteur-récepteur 111 et le deuxième émetteur-récepteur 112. Ce système 100 est configuré pour que chaque émetteur-récepteur 110 de la pluralité d'émetteurs-récepteurs 110 puisse évaluer sa proximité avec une partie au moins des autres émetteurs-récepteurs 110 de la pluralité d'émetteurs-récepteurs 110, et de préférence à chaque instant.

Ce système 100 permet à chaque porteur d'un émetteur-récepteur 110 d'être notifié dès lors qu'il approche d'un autre porteur à une distance prédéterminée.

L'utilisation de deux méthodes de mesures de la distance via deux modules radio aux technologies différentes permet dans une première phase d'évaluer d'une manière incertaine la distance mais avec une consommation énergétique faible, puis dans une deuxième phase, d'évaluer avec précision la distance mais cette fois-ci avec une consommation plus importante d'énergie.

La présente invention trouve particulière pour application le respect des distances sociales. En effet, la présente invention permet d'informer les utilisateurs dès lors qu'ils sont trop prêts les uns des autres, et leur permet ainsi de maintenir des distances de sécurité par exemple dans le cas d'une transmission par postillons d'un virus.

Selon un mode de réalisation, dans un espace donné, chaque personne est équipée d'un émetteur-récepteur selon la présente invention. Cet émetteur-récepteur définit donc une sorte de « Bulle de Sécurité » individuelle et bien sûr invisible.

Selon un mode de réalisation, ces « Bulles de Sécurité » sont construites à partir de pulses radio hyperfréquence de très bas niveau de puissance. Chaque « Bulle de Sécurité » interagie de façon automatique avec les émetteurs-récepteurs voisins. On notera que les distances précédemment présentées peuvent être ajustées individuellement et ainsi le diamètre de chaque « Bulle de Sécurité » peut donc être ajusté. On notera que de préférence, la précision de ce diamètre est de quelques centimètres.

Selon un mode de réalisation, lorsque deux émetteurs-récepteurs restent suffisamment distantes, ils interagissent pour vérifier leur distance relative.

Lorsque deux émetteurs-récepteurs sont trop proches l'un de l'autre, ils entrent chacun en collision avec la « Bulle de Sécurité » de l'autre et une notification, tel qu'une alarme par exemple, informe les deux porteurs.

Selon un mode de fonctionnement dit « mode repos », sans être proche d'un autre émetteur-récepteur, chaque émetteur-récepteur est en mode « découverte ». Il écoute occasionnellement pour voir si un autre dispositif est proche. Pour cela il utilise la fonction RSSI d'un module radio primaire de type BLE. Il se réveille lorsqu'une autre personne porteuse d'un émetteur-récepteur similaire s'approche. Dès que deux émetteurs-récepteurs sont dans ce premier niveau de contact, c'est-à-dire à une distance de repérage par exemple d'environ 10m à 20m, ils établissent une communication primaire, de préférence en BLE, et se synchronisent. Le mode « découverte » peut par exemple être un protocole BLE dans lequel le module radio primaire envoie régulièrement des paquets de données pour que tout émetteur-récepteur de la pluralité d'émetteurs-récepteurs autour d'elle l'identifie et puisse éventuellement communiquer avec lui.

En dessous de cette distance de repérage, l'émetteur-récepteur mesure, en continu et en temps réel, au moins la distance le séparant d'un autre émetteur-récepteur éloigné de lui d'une distance inférieure à la distance de repérage, de préférence cette mesure est de type RSSI tant que la distance s'éparant les deux émetteurs-récepteurs considérés n'est pas inférieure ou égale à la distance de communication secondaire.

Tant que cette distance mesurée est inférieure à la distance de communication primaire et supérieure à la distance de communication secondaire, alors la mesure de la distance est assurée par les modules radio primaires via la technique dite RSSI.

Dès lors que cette distance est inférieure ou égale à la distance de communication secondaire, la mesure de la distance est assurée par les modules radio secondaires, et cette mesure est transmise entre les émetteurs-récepteurs impliqués par les modules radio primaires. Ainsi cette mesure de distance est par exemple effectuée dix fois par seconde par une communication radio UWB au moyen des modules radios secondaires, tout en utilisant une synchronisation des communications assurée par les modules radio primaires de type BLE.

Lorsque la distance entre deux émetteurs-récepteurs devient inférieure à une limite prédéfinie, à la distance de notification, alors une notification est générée si le niveau de promiscuité évalué est supérieur à un seuil prédéterminé.

De manière avantageuse, chaque émetteur-récepteur effectue cette succession d'opérations avec tous les autres émetteurs-récepteurs de la pluralité d'émetteurs-récepteurs portés par les personnes présentes autour de chaque porteur. En effet, alors que l'émetteur-récepteur est déjà en communication primaire ou secondaire avec un autre émetteur-récepteur, il peut être également en mode découverte tout en étant en communication primaire ou secondaire avec encore un autre émetteur-récepteur. Ainsi chaque porteur est entouré d'une « Bulle de Sécurité » invisible qui l'informe immédiatement lorsqu'une ou plusieurs autres porteurs rentrent à l'intérieur de cette bulle.

L'invention n'est pas limitée aux modes de réalisations précédemment décrits et s'étend à tous les modes de réalisation couverts par les revendications.

### REFERENCES

100 Système de détection de proximité
110 Emetteur-récepteur portatif
111 Premier émetteur-récepteur
112 Deuxième émetteur-récepteur
120 Module radio primaire
121 Antenne du module radio primaire
130 Module radio secondaire
131 Antenne du module radio secondaire
140 Microprocesseur
150 Batterie
160 Module d'interaction homme/machine
200 Distance de repérage
300 Distance de communication primaire
400 Distance de communication secondaire
500 Distance de notification
600 Procédé de détection de proximité
610 Détection par le module radio primaire du premier émetteur-récepteur du module radio primaire du deuxième émetteur-récepteur
620 Communication primaire entre le premier émetteur-récepteur et le deuxième émetteur-récepteur via leur module radio primaire respectif
621 Evaluation d'une distance de communication primaire entre le premier émetteur-récepteur et le deuxième émetteur-récepteur
630 Communication secondaire entre le premier émetteur-récepteur et le deuxième émetteur-récepteur via leur module radio secondaire respectif
631 Evaluation d'une distance de communication secondaire entre le premier émetteur-récepteur et le deuxième émetteur-récepteur
640 Notification d'une proximité détectée

## Revendications

1. Système (100) de détection de proximité entre au moins un premier émetteur-récepteur (111) et au moins un deuxième émetteur-récepteur (112), le premier émetteur-récepteur (111) et le deuxième émetteur-récepteur (111) comprenant chacun au moins un module radio primaire (120) et un module radio secondaire (130), système dans lequel :
- le module radio primaire (120) du premier émetteur-récepteur (111) est apte à communiquer avec le module radio primaire (120) du deuxième émetteur-récepteur (112), selon une première bande de fréquences et selon une première amplitude ;
- le module radio secondaire (130) du premier émetteur-récepteur (111) est apte à communiquer avec le module radio secondaire (130) du deuxième émetteur-récepteur (112), selon une deuxième bande de fréquences, différente de la première bande de fréquences, et selon une deuxième amplitude, différente de la première amplitude ;
le premier émetteur-récepteur (111) et le deuxième émetteur-récepteur (112) étant configurés pour :
- lorsque le module radio primaire (120) du premier émetteur-récepteur (111) et le module radio primaire (120) du deuxième émetteur-récepteur (112) se rapprochent l'un de l'autre en passant sous une distance de communication primaire (300), évaluer une valeur primaire de distance entre le module radio primaire (120) du premier émetteur-récepteur (111) et le module radio primaire (120) du deuxième émetteur-récepteur (112) à partir d'une mesure de la puissance d'au moins un signal reçu par le module radio primaire (120) du premier émetteur-récepteur (111) depuis le module radio primaire (120) du deuxième émetteur-récepteur (112) ; et,
- si la valeur primaire de distance évaluée passe sous une distance de communication secondaire (400) entre le module radio secondaire (130) du premier émetteur-récepteur (111) et le module radio secondaire (130) du deuxième émetteur-récepteur (112), pour :
• évaluer une valeur secondaire de distance entre le module radio primaire (120) du premier émetteur-récepteur (111) et le module radio primaire (120) du deuxième émetteur-récepteur (112) à partir d'au moins une mesure du temps de transmission d'un signal transmis depuis le module radio secondaire (130) du premier émetteur-récepteur (111) vers le module radio secondaire (130) du deuxième émetteur-récepteur (112) ; et,
• si la valeur secondaire de distance évaluée est inférieure à une distance de notification (500) prédéterminée, pour évaluer un niveau de promiscuité, et notifier une détection de proximité si le niveau de promiscuité est supérieur à un seuil prédéterminé, et dans lequel le niveau de promiscuité comprend au moins l'un des paramètres suivants : un temps écoulé depuis le franchissement d'une distance seuil, le franchissement d'une distance seuil.

2. Système (100) selon la revendication précédente dans lequel la première bande de fréquences présente une largeur inférieure à une largeur de la deuxième bande de fréquences.

3. Système (100) selon l'une quelconque des revendications précédentes dans lequel la première bande de fréquence présente une largeur et dans lequel la deuxième bande de fréquence présente une largeur, le ratio entre la largeur de la deuxième bande de fréquence et la largeur de la première bande de fréquence est supérieure à 50, de préférence à 100 et avantageusement à 250.

4. Système (100) selon l'une quelconque des revendications précédentes dans lequel la première amplitude est supérieure à la deuxième amplitude.

5. Système (100) selon l'une quelconque des revendications précédentes dans lequel le ratio entre la première amplitude et la deuxième amplitude est supérieure à 10, de préférence à 20 et avantageusement à 40.

6. Système (100) selon l'une quelconque des revendications précédentes dans lequel la communication entre le module radio secondaire (130) du premier émetteur-récepteur (111) et le module radio secondaire (130) du deuxième émetteur-récepteur (112) est une communication synchronisée, la synchronisation de cette communication synchronisée étant assurée en partie au moins par le module radio primaire (120) du premier émetteur-récepteur (111) et par le module radio primaire (120) du deuxième émetteur-récepteur (112).

7. Système (100) selon l'une quelconque des revendications précédentes dans lequel la valeur secondaire de distance évaluée est transmise au deuxième émetteur-récepteur (112) depuis le module radio primaire (120) du premier émetteur-récepteur (111) vers le module radio primaire (120) du deuxième émetteur-récepteur (112).

8. Système (100) selon l'une quelconque des revendications 1 à 5 dans lequel le premier émetteur-récepteur (111) est configuré pour, si la valeur primaire de distance évaluée passe sous la distance de communication secondaire (400) entre le module radio secondaire (130) du premier émetteur-récepteur (111) et le module radio secondaire (130) du deuxième émetteur-récepteur (112), stopper l'évaluation de la valeur primaire de distance.

9. Emetteur-récepteur (111) configuré pour détecter une distance de proximité avec au moins un deuxième émetteur-récepteur (112) pris parmi une pluralité d'émetteurs-récepteurs (110), l'émetteur-récepteur (111) comprenant au moins :
- Un module radio primaire (120) configuré pour communiquer avec au moins un module radio primaire (120) du deuxième émetteur-récepteur (112) selon une première bande de fréquences et selon une première amplitude ;
- Un module radio secondaire (130) configuré pour communiquer avec au moins un module radio secondaire (130) du deuxième émetteur-récepteur (112) selon une deuxième bande de fréquences, différente de la première bande de fréquences, et selon une deuxième amplitude, différente de la première amplitude ;
- L'émetteur-récepteur (111) étant configuré pour :
• lorsque son module radio primaire (120) et le module radio primaire (120) du deuxième émetteur-récepteur (112) se rapprochent l'un de l'autre en passant sous une distance de communication primaire (300), évaluer une valeur primaire de distance entre le module radio primaire (120) du premier émetteur-récepteur (111) et le module radio primaire (120) du deuxième émetteur-récepteur (112) à partir d'une mesure de la puissance d'au moins un signal reçu par le module radio primaire (120) du premier émetteur-récepteur (111) depuis le module radio primaire (120) du deuxième émetteur-récepteur (112) ; et,
• si la valeur primaire de distance évaluée passe sous une distance de communication secondaire (400) entre son module radio secondaire (130) et le module radio secondaire (130) du deuxième émetteur-récepteur (112), pour:
∘ évaluer une valeur secondaire de distance entre son module radio primaire (120) et le module radio primaire (120) du deuxième émetteur-récepteur (112) à partir d'au moins une mesure du temps de transmission d'un signal transmis depuis son module radio secondaire (130) vers le module radio secondaire (130) du deuxième émetteur-récepteur (112) ; et,
∘ si la valeur secondaire de distance évaluée est inférieure à une distance de notification (500) prédéterminée, pour évaluer un niveau de promiscuité, et notifier une détection de proximité si le niveau de promiscuité est supérieur à un seuil prédéterminé, le niveau de promiscuité comprenant au moins l'un des paramètres suivants : un temps écoulé depuis le franchissement d'une distance seuil, le franchissement d'une distance seuil.

10. Emetteur-récepteur (111) selon la revendication précédente comprenant au moins un module d'interaction homme/machine (160) configuré pour permettre la notification de la détection de proximité, ledit module d'interaction homme/machine (160) comprenant au moins l'un parmi : un module de vibration, un module sonore, un module lumineux, etc...

11. Emetteur-récepteur selon l'une quelconque des deux revendications précédentes comprenant au moins un dispositif d'attache configuré pour permettre la fixation de l'émetteur-récepteur (111) sur un utilisateur.

12. Dispositif bracelet comprenant au moins un émetteur-récepteur (111) selon l'une quelconque des trois revendications précédentes.

13. Procédé (600) de détection de proximité entre un premier émetteur-récepteur (111) et au moins un deuxième émetteur-récepteur (112), le premier émetteur-récepteur (111) et le deuxième émetteur-récepteur (112) comprenant chacun au moins un module radio primaire (120) et un module radio secondaire (130), le module radio primaire (120) du premier émetteur-récepteur (111) étant configuré pour communiquer avec au moins le module radio primaire (120) du deuxième émetteur-récepteur (112) selon une première bande de fréquences et selon une première amplitude, le module radio secondaire (130) du premier émetteur-récepteur (111) étant configuré pour communiquer avec au moins le module radio secondaire (130) du deuxième émetteur-récepteur (112) selon une deuxième bande de fréquences, différente de la première bande de fréquences, et selon une deuxième amplitude, différente de la première amplitude, le procédé (600) comprenant au moins les étapes suivantes :
- Détection (610) par le module radio primaire (120) du premier émetteur-récepteur (111) du module radio primaire (120) du deuxième émetteur-récepteur (112) ;
- Lorsque le module radio primaire (120) du premier émetteur-récepteur (111) et le module radio primaire (120) du deuxième émetteur-récepteur (112) se rapprochent l'un de l'autre en passant sous une distance de communication primaire (300), évaluation (621), par le premier émetteur-récepteur (111), d'une valeur primaire de distance entre le module radio primaire (120) du premier émetteur-récepteur (111) et le module radio primaire (120) du deuxième émetteur-récepteur (112) à partir d'une mesure de la puissance d'au moins un signal reçu par le module radio primaire (120) du premier émetteur-récepteur (111) depuis le module radio primaire (120) du deuxième émetteur-récepteur (112) ;
- Si la valeur primaire de distance évaluée passe sous une distance de communication secondaire (400) entre le module radio secondaire (130) du premier émetteur-récepteur (111) et le module radio secondaire (130) du deuxième émetteur-récepteur (112), détection par le module radio secondaire (130) du premier émetteur-récepteur (111) du module radio secondaire (130) du deuxième émetteur-récepteur (112) ; Puis,
- Evaluation (631), par le premier émetteur-récepteur (111), d'une valeur secondaire de distance entre le module radio secondaire (130) du premier émetteur-récepteur (111) et le module radio secondaire (130) du deuxième émetteur-récepteur (112) à partir d'au moins une mesure du temps de transmission d'un signal transmis depuis le module radio secondaire (130) du premier émetteur-récepteur (111) vers le module radio secondaire (130) du deuxième émetteur-récepteur (112) ;
- Si la valeur secondaire de distance évaluée est inférieure à une distance de notification (500) prédéterminée, évaluation d'un niveau de promiscuité, par le premier émetteur-récepteur (111), et notification (640) d'une détection de proximité, par le premier émetteur-récepteur (111), si le niveau de promiscuité est supérieur à un seuil prédéterminé, le niveau de promiscuité comprenant au moins l'un des paramètres suivants : un temps écoulé depuis le franchissement d'une distance seuil, le franchissement d'une distance seuil.

14. Produit programme d'ordinateur comprenant des instructions, qui lorsqu'elles sont effectuées par au moins un processeur (140), exécute au moins les étapes du procédé (600) selon la revendication précédente.

## Patentansprüche

1. Näherungssensorsystem (100) zwischen mindestens einem ersten Sendeempfänger (111) und mindestens einem zweiten Sendeempfänger (112), wobei der erste Sendeempfänger (111) und der zweite Sendeempfänger (111) jeweils mindestens ein primäres Funkmodul (120) und ein sekundäres Funkmodul (130) umfassen, wobei im System:
- das primäre Funkmodul (120) des ersten Sendeempfängers (111) ausgelegt ist, mit dem primären Funkmodul (120) des zweiten Sendeempfängers (112) gemäß einem ersten Frequenzband und gemäß einer ersten Amplitude zu kommunizieren;
- das sekundäre Funkmodul (130) des ersten Sendeempfängers (111) ausgelegt ist, mit dem sekundären Funkmodul (130) des zweiten Sendeempfängers (112) gemäß einem zweiten Frequenzband, das sich von dem ersten Frequenzband unterscheidet, und gemäß einer zweiten Amplitude, die sich von der ersten Amplitude unterscheidet, zu kommunizieren;
wobei der erste Sendeempfänger (111) und der zweite Sendeempfänger (112) konfiguriert sind zum:
- wenn das primäre Funkmodul (120) des ersten Sendeempfängers (111) und das primäre Funkmodul (120) des zweiten Sendeempfängers (112) sich einander annähern, wobei sie einen primären Kommunikationsabstand (300) unterschreiten, Prüfen eines primären Abstandswerts zwischen dem primären Funkmodul (120) des ersten Senderempfängers (111) und dem primären Funkmodul (120) des zweiten Sendeempfängers (112) aus einer Messung der Leistung mindestens eines Signals, das das primäre Funkmodul (120) des ersten Sendeempfängers (111) von dem primären Funkmodul (120) des zweiten Sendeempfängers (112) empfängt; und
- wenn der geprüfte primäre Abstandswert einen sekundären Kommunikationsabstand (400) zwischen dem sekundären Funkmodul (130) des ersten Sendeempfängers (111) und dem sekundären Funkmodul (130) des zweiten Sendeempfängers (112) unterschreitet, zum:
• Prüfen eines sekundären Abstandswerts zwischen dem primären Funkmodul (120) des ersten Sendeempfängers (111) und dem primären Funkmodul (120) des zweiten Sendeempfängers (112) aus mindestens einer Messung der Übertragungszeit eines Signals, das von dem sekundären Funkmodul (130) des ersten Sendeempfängers (111) an das sekundäre Funkmodul (130) des zweiten Sendeempfängers (112) übertragen wird; und
• wenn der geprüfte sekundäre Abstandswert kleiner als ein vorbestimmter Meldungsabstand (500) ist, zum Prüfen eines Ausmaßes an Promiskuität und Melden einer Näherungserfassung, wenn das Ausmaß an Promiskuität größer als ein vorbestimmter Schwellenwert ist, und wobei das Ausmaß an Promiskuität mindestens eines der folgenden Parameter umfasst: eine seit dem Überschreiten eines Schwellenabstands verstrichene Zeit, das Überschreiten eines Schwellenabstands.

2. System (100) nach dem vorhergehenden Anspruch, wobei das erste Frequenzband eine Breite aufweist, die kleiner als eine Breite des zweiten Frequenzbands ist.

3. System (100) nach einem der vorhergehenden Ansprüche, wobei das erste Frequenzband eine Breite aufweist und wobei das zweite Frequenzband eine Breite aufweist, wobei das Verhältnis zwischen der Breite des zweiten Frequenzbands und der Breite des ersten Frequenzbands größer als 50, vorzugsweise als 100 und vorteilhafterweise als 250 ist.

4. System (100) nach einem der vorhergehenden Ansprüche, wobei die erste Amplitude größer als die zweite Amplitude ist.

5. System (100) nach einem der vorhergehenden Ansprüche, wobei das Verhältnis zwischen der ersten Amplitude und der zweiten Amplitude größer als 10, vorzugsweise als 20 und vorteilhafterweise als 40 ist.

6. System (100) nach einem der vorhergehenden Ansprüche, wobei die Kommunikation zwischen dem sekundären Funkmodul (130) des ersten Sendeempfängers (111) und dem sekundären Funkmodul (130) des zweiten Sendeempfängers (112) eine synchronisierte Kommunikation ist, wobei die Synchronisation dieser synchronisierten Kommunikation zumindest teilweise durch das primäre Funkmodul (120) des ersten Sendeempfängers (111) und durch das primäre Funkmodul (120) des zweiten Sendeempfängers (112) gewährleistet wird.

7. System (100) nach einem der vorhergehenden Ansprüche, wobei der geprüfte sekundäre Abstandswert von dem primären Funkmodul (120) des ersten Sendeempfängers (111) zu dem primären Funkmodul (120) des zweiten Sendeempfängers (112) an den zweiten Sendeempfänger (112) übertragen wird.

8. System (100) nach einem der Ansprüche 1 bis 5, wobei der erste Sendeempfänger (111) konfiguriert ist zum Stoppen der Prüfung des primären Abstandswerts, wenn der geprüfte primäre Abstandswert den sekundären Kommunikationsabstand (400) zwischen dem sekundären Funkmodul (130) des ersten Sendeempfängers (111) und dem sekundären Funkmodul (130) des zweiten Sendeempfängers (112) unterschreitet.

9. Sendeempfänger (111), der konfiguriert ist zum Erfassen eines Annäherungsabstands mit mindestens einem zweiten Sendeempfänger (112), der aus mehreren Sendeempfängern (110) gewählt wird, wobei der Sendeempfänger (111) mindestens Folgendes umfasst:
- ein primäres Funkmodul (120), das konfiguriert ist, mit mindestens einem primären Funkmodul (120) des zweiten Sendeempfängers (112) gemäß einem ersten Frequenzband und gemäß einer ersten Amplitude zu kommunizieren;
- ein sekundäres Funkmodul (130), das konfiguriert ist, mit mindestens einem sekundären Funkmodul (130) des zweiten Sendeempfängers (112) gemäß einem zweiten Frequenzband, das sich von dem ersten Frequenzband unterscheidet, und gemäß einer zweiten Amplitude, die sich von der ersten Amplitude unterscheidet, zu kommunizieren;
- wobei der Sendeempfänger (111) konfiguriert ist zum:
• wenn sein primäres Funkmodul (120) und das primäre Funkmodul (120) des zweiten Sendeempfängers (112) sich einander annähern, wobei sie einen primären Kommunikationsabstand (300) unterschreiten, Prüfen eines primären Abstandswerts zwischen dem primären Funkmodul (120) des ersten Sendeempfängers (111) und dem primären Funkmodul (120) des zweiten Sendeempfängers (112) aus einer Messung der Leistung mindestens eines Signals, das von dem primären Funkmodul (120) des ersten Sendeempfängers (111) und dem primären Funkmodul (120) des zweiten Sendeempfängers (112) empfangen wird; und
• wenn der geprüfte primäre Abstandswert einen sekundären Kommunikationsabstand (400) zwischen seinem sekundären Funkmodul (130) und dem sekundären Funkmodul (130) des zweiten Sendeempfängers (112) unterschreitet, zum:
o Prüfen eines sekundären Abstandswerts zwischen seinem primären Funkmodul (120) und dem primären Funkmodul (120) des zweiten Sendeempfängers (112) aus mindestens einer Messung der Übertragungszeit des Signals von seinem sekundären Funkmodul (130) zu dem sekundären Funkmodul (130) des zweiten Sendeempfängers (112); und
o wenn der geprüfte sekundäre Abstandswert kleiner als ein vorbestimmter Meldungsabstand (500) ist, zum Prüfen eines Ausmaßes an Promiskuität und Melden einer Annäherungserfassung, wenn das Ausmaß an Promiskuität größer als ein vorbestimmter Schwellenwert ist, wobei das Ausmaß an Promiskuität mindestens einen der folgenden Parameter umfasst: eine seit dem Überschreiten eines Schwellenabstands verstrichene Zeit, das Überschreiten eines Schwellenabstands.

10. Sendeempfänger (111) nach dem vorhergehenden Anspruch, der mindestens ein Mensch/Maschine-Interaktionsmodul (160) umfasst, das konfiguriert ist, um eine Meldung über eine Näherungserfassung zu ermöglichen, wobei das Mensch/Maschine-Interaktionsmodul (160) mindestens eines von einem Vibrationsmodul, einem Tonmodul, einem Lichtmodul usw. umfasst.

11. Sendeempfänger nach einem der beiden vorhergehenden Ansprüche, umfassend mindestens eine Befestigungsvorrichtung, die konfiguriert ist, um die Fixierung des Sendeempfängers (111) an einem Benutzer zu ermöglichen.

12. Armbandvorrichtung mit mindestens einem Sendeempfänger (111) nach einem der drei vorhergehenden Ansprüche.

13. Verfahren (600) zum Erfassen der Annäherung zwischen einem ersten Sendeempfänger (111) und mindestens einem zweiten Sendeempfänger (112), wobei der erste Sendeempfänger (111) und der zweite Sendeempfänger (112) jeweils mindestens ein primäres Funkmodul (120) und ein sekundäres Funkmodul (130) umfassen, wobei das primäre Funkmodul (120) des ersten Sendeempfängers (111) konfiguriert ist, mit mindestens dem primären Funkmodul (120) des zweiten Sendeempfängers (112) gemäß einem ersten Frequenzband und gemäß einer ersten Amplitude zu kommunizieren, wobei das sekundäre Funkmodul (130) des ersten Sendeempfängers (111) konfiguriert ist, mit mindestens dem sekundären Funkmodul (130) des zweiten Sendeempfängers (112) gemäß einem zweiten Frequenzband, das sich von dem ersten Frequenzband unterscheidet, und gemäß einer zweiten Amplitude, die sich von der ersten Amplitude unterscheidet, zu kommunizieren, wobei das Verfahren (600) mindestens die folgenden Schritte umfasst:
- Erfassen (610), durch das primäre Funkmodul (120) des ersten Sendeempfängers (111), des primären Funkmoduls (120) des zweiten Sendeempfängers (112);
- wenn das primäre Funkmodul (120) des ersten Sendeempfängers (111) und das primäre Funkmodul (120) des zweiten Sendeempfängers (112) sich einander annähern, wobei sie einen primären Kommunikationsabstand (300) unterschreiten, Prüfen (621), durch den ersten Sendeempfänger (111), eines primären Abstandswerts zwischen dem primären Funkmodul (120) des ersten Senderempfängers (111) und dem primären Funkmodul (120) des zweiten Sendeempfängers (112) aus einer Messung der Leistung mindestens eines Signals, das das primäre Funkmodul (120) des ersten Sendeempfängers (111) von dem primären Funkmodul (120) des zweiten Sendeempfängers (112) empfängt;
- wenn der geprüfte primäre Abstandswert einen sekundären Kommunikationsabstand (400) zwischen dem sekundären Funkmodul (130) des ersten Sendeempfängers (111) und dem sekundären Funkmodul (130) des zweiten Sendeempfängers (112) unterschreitet, Erfassen, durch das sekundäre Funkmodul (130) des ersten Sendeempfängers (111), des sekundären Funkmoduls (130) des zweiten Sendeempfängers (112); dann
- Prüfen (631), durch den ersten Sendeempfänger (111), eines sekundären Abstandswerts zwischen dem sekundären Funkmodul (130) des ersten Sendeempfängers (111) und dem sekundären Funkmodul (130) des zweiten Sendeempfängers (112) aus mindestens einer Messung der Übertragungszeit eines Signals, das von dem sekundären Funkmodul (130) des ersten Sendeempfängers (111) an das sekundäre Funkmodul (130) des zweiten Sendeempfängers (112) übertragen wird;
- wenn der geprüfte sekundäre Abstandswert kleiner als ein vorbestimmter Meldungsabstand (500) ist, Prüfen eines Ausmaßes an Promiskuität durch den ersten Sendeempfänger (111) und Melden (640) einer Näherungserfassung durch den ersten Sendeempfänger (111), wenn das Ausmaß an Promiskuität größer als ein vorbestimmter Schwellenwert ist, wobei das Ausmaß an Promiskuität mindestens einen der folgenden Parameter umfasst: eine seit dem Überschreiten eines Schwellenabstands verstrichene Zeit, das Überschreiten eines Schwellenabstands.

14. Computerprogrammprodukt, das Anweisungen umfasst, die, wenn sie von mindestens einem Prozessor (140) ausgeführt werden, mindestens die Schritte des Verfahrens (600) nach dem vorhergehenden Anspruch ausführen.

## Claims

1. A proximity detection system (100) between at least a first transceiver (111) and at least a second transceiver (112), the first transceiver (111) and the second transceiver (111) each comprising at least one primary radio module (120) and one secondary radio module (130), the system wherein:
- the primary radio module (120) of the first transceiver (111) is able to communicate with the primary radio module (120) of the second transceiver (112), in a first frequency band and in a first amplitude;
- the secondary radio module (130) of the first transceiver (111) is able to communicate with the secondary radio module (130) of the second transceiver (112) in a second frequency band different from the first frequency band, and in a second amplitude different from the first amplitude;
the first transceiver (111) and the second transceiver (112) being configured:
- when the primary radio module (120) of the first transceiver (111) and the primary radio module (120) of the second transceiver (112) come closer to each other, falling below a primary communication distance (300), to estimate a primary distance value between the primary radio module (120) of the first transceiver (111) and the primary radio module (120) of the second transceiver (112) from a measurement of the strength of at least one signal received by the primary radio module (120) of the first transceiver (111) from the primary radio module (120) of the second transceiver (112); and
- if the estimated primary distance value is less than a second communication distance (400) between the secondary radio module (130) of the first transceiver (111) and the secondary radio module (130) of the second transceiver (112), to:
• estimate a secondary distance value between the primary radio module (120) of the first transceiver (111) and the primary radio module (120) of the second transceiver (112) from at least a measurement of the transmission time of a signal transmitted from the secondary radio module (130) of the first transceiver (111) to the secondary radio module (130) of the second transceiver (112); and,
• If the estimated secondary distance value is less than a predetermined notification distance (500), to estimate a degree of nearness, and notify a detection of proximity if the degree of nearness exceeds a predetermined threshold, and wherein the degree of nearness comprises at least one of the following parameters: a time interval since the crossing of a threshold distance, the crossing of a threshold distance.

2. The system (100) according to the previous claim wherein the first frequency band has a width less than a width of the second frequency band.

3. The system (100) according to any of the previous claims wherein the first frequency band has a width and wherein the second frequency band has a width, the ratio between the width of the second frequency band and the width of the first frequency band is greater than 50, preferably 100 and advantageously 250.

4. The system (100) according to any of the previous claims wherein the first amplitude is greater than the second amplitude.

5. The system (100) according to any of the previous claims wherein the ratio between the first amplitude and the second amplitude is greater than 10, preferably 20 and advantageously 40.

6. The system (100) according to any of the previous claims wherein the communication between the secondary radio module (130) of the first transceiver (111) and the secondary radio module (130) of the second transceiver (112) is a synchronised communication, the synchronisation of such synchronised communication being performed at least partly by the primary radio module (120) of the first transceiver (111) and by the primary radio module (120) of the second transceiver (112).

7. The system (100) according to any of the previous claims wherein the estimated secondary distance value is transmitted to the second transceiver (112) from the primary radio module (120) of the first transceiver (111) to the primary radio module (120) of the second transceiver (112).

8. The system (100) according to any of claims 1 to 5 wherein the first transceiver (111) is configured, when the estimated primary distance value is less than the secondary communication distance (400) between the secondary radio module (130) of the first transceiver (111) and the secondary radio module (130) of the second transceiver (112), to stop the estimation of the primary distance value.

9. A transceiver (111) configured to detect a proximity distance with at least a second transceiver (112) from a multitude of other transceivers (110), the transceiver (111) comprising at least:
- a primary radio module (120) configured to communicate with at least a primary radio module (120) of the second transceiver (112) in a first frequency band and in a first amplitude;
- a secondary radio module (130) configured to communication with at least a secondary radio module (130) of the second transceiver (112) in a second frequency band different from the first frequency band, and in a second amplitude different from the first amplitude;
- the transceiver (111) being configured:
• when its primary radio module (120) and the primary radio module (120) of the second transceiver (112) come closer to each other, falling below a primary communication distance (300), to estimate a primary distance value between the primary radio module (120) of the first transceiver (111) and the primary radio module (120) of the second transceiver (112) from a measurement of the strength of at least one signal received by the primary radio module (120) of the first transceiver (111) from the primary radio module (120) of the second transceiver (112); and
• if the estimated primary distance value is less than a second communication distance (400) between its secondary radio module (130) and the secondary radio module (130) of the second transceiver (112), to:
o estimate a secondary distance value between its primary radio module (120) and the primary radio module (120) of the second transceiver (112) from at least a measurement of the transmission time of a signal transmitted from its secondary radio module (130) to the secondary radio module (130) of the second transceiver (112); and,
o if the estimated secondary distance value is less than a predetermined notification distance (500), to estimate a degree of nearness, and notify a detection of proximity if the degree of nearness exceeds a predetermined threshold, the degree of nearness comprising at least one of the following parameters: a time interval since the crossing of a threshold distance, the crossing of a threshold distance.

10. The transceiver (111) according to the previous claim comprising at least a human-machine interaction module (160) configured to allow for notification of proximity detection, said human-machine interaction module (160) comprising at least one from: a vibration module, a sound module, a light module, etc...

11. The transceiver according to any of the previous claims comprising at least a fastening device configured to allow to fasten the transceiver (111) on a user.

12. A bracelet device comprising at least one transceiver (111) according to any of the three previous claims.

13. A proximity detection method (600) between a first transceiver (111) and at least a second transceiver (112), the first transceiver (111) and the second transceiver (112) each comprising at least a primary radio module (120) and a secondary radio module (130), the primary radio module (120) of the first transceiver (111) being configured to communicate with at least the primary radio module (120) of the second transceiver (112) in a first frequency band and in a first amplitude, the secondary radio module (130) of the first transceiver (111) being configured to communicate with at least the secondary radio module (130) of the second transceiver (112) in a second frequency band different from the first frequency band, and in a second amplitude different from the first amplitude, the method (600) comprising at least the following steps:
- detection (610) by the primary radio module (120) of the first transceiver (111) of the primary radio module (120) of the second transceiver (112);
- when the primary radio module (120) of the first transceiver (111) and the primary radio module (120) of the second transceiver (112) come closer to each other, falling below a primary communication distance (300), estimation (621), by the first transceiver (111), of a primary distance value between the primary radio module (120) of the first transceiver (111) and the primary radio module (120) of the second transceiver (112) from a measurement of the strength of at least one signal received by the primary radio module (120) of the first transceiver (111) from the primary radio module (120) of the second transceiver (112);
- if the estimated primary distance value is less than a secondary communication distance (400) between the secondary radio module (130) of the first transceiver (111) and the secondary radio module (130) of the secondary transceiver (112), detection by the secondary radio module (130) of the first transceiver (111) of the secondary radio module (130) of the second transceiver (112); then,
- estimation (631), by the first transceiver (111), of a secondary distance value between the secondary radio module (130) of the first transceiver (111) and the secondary radio module (130) of the second transceiver (112) from at least a measurement of the transmission time of a signal transmitted from the secondary radio module (130) of the first transceiver (111) to the secondary radio module (130) of the secondary transceiver (112);
- if the estimated secondary distance value is less than a predetermined notification distance (500), estimation of a degree of nearness, by the first transceiver (111), and notification (640) of a proximity detection, by the first transceiver (111), if the degree of nearness is greater than a predetermined threshold, the degree of nearness comprising at least one of the following parameters: a time interval since the crossing of a threshold distance, the crossing of a threshold distance.

14. A computer programme product comprising instructions, which when executed by at least a processor (140), execute at least the steps of the method (600) according to the previous claim.
